# EUROPÄISCHE PATENTSCHRIFT

(11) **EP 0 555 672 B1**
(45) Veröffentlichungstag und Bekanntmachung des Hinweises auf die Patenterteilung: **16.08.1995**
(21) Anmeldenummer: 93100974.0
(22) Anmeldetag: 22.01.1993
(51) Int. Cl.: C02F 1/40, E03F 5/16

(54) **Abscheider für hochviskose oder beim Erkalten erstarrende Leichtstoffe aus Abwasser**
Separator for light material from waste water, i.e. high-viscous light material or light material coagulating during cool down
Séparateur pour matières légères à partir des eaux usées, les matières légères étant très visqueuses ou se solidifiant en cas de refroidissement

(30) Priorität: 04.02.1992 DE 4203102
(43) Veröffentlichungstag der Anmeldung: 18.08.1993
(73) Patentinhaber: PASSAVANT-WERKE AG, 65322 Aarbergen 7 (DE)
(72) Erfinder: Bachon, Ulrich, Dipl.-Ing., W-6252 Diez (DE)

(56) Entgegenhaltungen:
- DE-A- 3 704 911
- DE-A- 4 041 441
- DE-A- 4 119 532
- DE-B- 2 555 136
- US-A- 5 106 494

## Beschreibung

Die Erfindung bezieht sich auf einen Schwerkraftabscheider für Abwässer, die mit hochviskosen oder beim Erkalten erstarrenden Leichtstoffen, insbesondere pflanzlichen und tierischen Ölen und Fetten belastet sind.

Es ist bekannt, derartige Abscheider dadurch zu entsorgen, daß die aufgerahmte Leichtstoffschicht durch scharfe Flüssigkeitsstrahlen aufgerissen und mit dem übrigen Abscheiderinhalt vermischt wird. Dieses Gemisch wird dann abgepumpt (DE-PS 20 03 565). Die Flüssigkeitsstrahlen werden von sog. Drehrührern erzeugt, die an den Armenden mit durch den Rückstoß angetriebenen Strahldüsen versehen sind. Die Drehrührer besitzen in der Regel auch eine nach unten gerichtete Strahldüse, die den - bei Küchenabwässern häufig auftretenden - Schlamm ebenfalls aufwirbelt und vermischt.

Es hat sich gezeigt, daß einerseits die nur auf einen schmalen Bereich wirkenden Strahldüsen die abgetrennten Schichten nicht vollständig aufreißen und verwirbeln und andererseits durch die Verwendung von mehreren Dreharmen pro Drehrührer oder mehreren Drehrührern die mechanische Leistung der Spülstrahlen zu gering ist, weil die die Strahldüsen versorgende Pumpe nicht leistungsfähig genug ist.

Die sich aus diesen Nachteilen herleitende Aufgabe, nämlich die Verbesserung der Aufreißwirkung der Strahldüsen, wird gemäß der Erfindung dadurch gelöst, daß die auf eine kleine Zahl verringerten Strahldüsen um eine Achse frei drehbar am Drehrührer befestigt sind. Vorzugsweise besitzt der Abscheider zwei Drehrührer mit je einer Strahldüse, wobei eine Strahldüse nach oben und die andere nach unten gerichtet ist. Durch die Tatsache, daß die Düsen an einem Dreharm frei drehbar gelagert sind, wird in Verbindung mit einer bevorzugten Schrägstellung der Strahlrichtung zur Drehachse der Strahldüse ein breiter Einwirkbereich der Strahlen erreicht. Der Strahl erfaßt dann, wenn er schräg nach außen gerichtet ist, auch weiter außen liegende Abschnitte der Schicht und reißt diese auf. Eine Variante dieser Drehrühreranordnung ist die Verwendung von nur einem Drehrührer mit zwei Dreharmen in verschiedener Höhe. Diese Bauart ist für kleinere Abscheider geeignet.

Die Wirkung der Spülstrahlen kann nochmals verbessert werden, wenn erfindungsgemäß an den Armen des Drehrührers noch mechanische Aufreißmittel befestigt sind, die mit ihren Enden vorzugweise bis in die abgesonderten Schichten reichen und dann von diesen mit angetrieben werden. Diese Aufreißmittel können als Pflugschaufeln oder Schlagblätter ausgebildet sein

In den Zeichnungen ist eine Drehrührerausführung in der Vorderansicht dargestellt. Gezeigt sind nur die Sprühwasserzuleitung 1 und die im Abscheider aufgeschwommene Leichtstoffschicht 2 und die Sinkstoffschicht 3. Über ein Rohrdrehgelenk 4 ist der Drehrührer 5 an die Zuleitung 1 angeschlossen. Der Drehrührer besitzt zwei in verschiedener Höhe angesetzte Dreharme 6, 7, die am Ende in Umlaufrichtung abgewinkelt sind. Dort sind weitere Rohrdrehgelenke 8, 9 vorgesehen, deren Achsen 10, 11 schiefwinkelig zur Tangente an die Umlaufrichtung der Arme liegen, insbesondere schräg nach oben bzw. unten. Die Sprühdüsen 12, 13 selber sind nochmals schräg nach außen auf den Düsenträger aufgesetzt, so daß sich durch den Rückstoß der Spülstrahlen eine Vortriebskomponente sowohl in Umfangsrichtung 14 des Rohrgelenks als auch des Drehrührers ergibt. Der von der kreiselnden Strahldüse direkt überstrichene Einwirkbereich 15 ist ein breiter Ringstreifen. Die nach außen angrenzenden Bereiche der Schwimmschicht werden indirekt mit aufgerissen und verwirbelt.

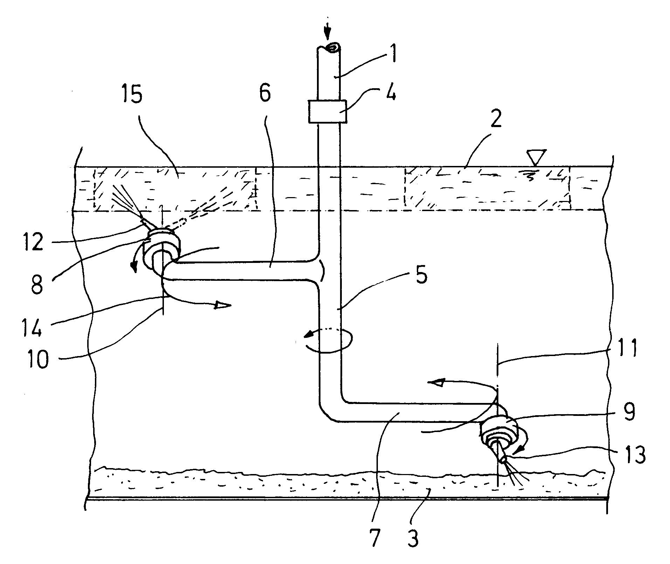

## Patentansprüche

1. Abscheider für hochviskose oder beim Erkalten erstarrende Leichtflüssigkeiten, wie zum Beispiel Fetten und Ölen aus Abwasser, enthaltend einen vom Abwasser im wesentlichen horizontal und beruhigt durchströmten Abscheidebehälter und mindestens einen um eine Achse frei umlaufenden Drehrührer, der am Ende des Dreharms Strahldüsen aufweist, die durch Rückstoß des beschickten Wassers angetrieben sind,
**dadurch gekennzeichnet**, daß die Strahldüse (12, 13) um eine Drehachse des Dreharms (6, 7) frei drehbar gelagert ist.

2. Abscheider nach Anspruch 1, **dadurch gekennzeichnet**, daß die Drehachse (10, 11) der Strahldüse (12, 13) von der Tangente an die Umlaufrichtung des Dreharms (6, 7) abweicht.

3. Abscheider nach Anspruch 1 oder 2, **dadurch gekennzeichnet**, daß die Strahlrichtung der Strahldüse (12, 13) von der Tangente an die Umlaufrichtung des Dreharms (6, 7) und der Drehachse (10, 11) der Strahldüse (12, 13) abweicht.

4. Abscheider nach Anspruch 1 bis 3, **dadurch gekennzeichnet**, daß der Drehrührer (5) zwei diametral ausgerichtete Dreharme (6, 7) in verschiedener Höhe aufweist.

5. Abscheider nach Anspruch 1 bis 3, **dadurch gekennzeichnet**, daß der Abscheider zwei Drehrührer mit je einem Dreharm in verschiedener Höhe aufweist.

6. Abscheider nach Anspruch 4 oder 5, **dadurch gekennzeichnet**, daß die Strahldüse (12) des oberen Dreharms (6) nach oben und die des unteren Dreharms (7) nach unten gerichtet ist.

7. Abscheider nach Anspruch 1 bis 6, **dadurch gekennzeichnet**, daß an den Dreharmen (6, 7) noch mechanische Aufwirbelorgane, wie z.B. Schlagblätter oder Pflugschaufeln, befestigt sind.

## Claims

1. Separator for highly viscous liquids or liquids with a low viscosity which congeal when growing cold, such as grease and oil from waste water, comprising a sedimentation tank with a mostly horizontal and steady waste water flow and, at least, one stirring unit freely rotating around an axis, being provided with jet nozzles at the end of the pivoting arm which are propelled by the repulsion of the injected water, **characterized in that** the jet nozzle (12, 13) is pivoted in the axis of the pivoting arm (6, 7).

2. Separator according to claim 1, **characterized in that** the axis of rotation (10, 11) of the jet nozzle (12, 13) deviates from the tangent line to the moving direction of the pivoting arm (6, 7).

3. Separator according to claim 1 or 2, **characterized in that** the spray direction of the jet nozzle (12, 13) deviates from the tangent line to the moving direction of the pivoting arm (6, 7) and the axis of rotation (10, 11) of the jet nozzle (12, 13).

4. Separator according to claims 1 through 3, **characterized in that** the stirring unit (5) is provided with two pivoting arms (6, 7) which are arranged diametrically at different heights.

5. Separator according to claims 1 through 3, **characterized in that** the separator is provided with two stirring units with one pivoting arm each at different heights.

6. Separator according to claim 4 or 5, **characterized in that** the jet nozzle (12) of the upper pivoting arm (6) is directed upward and the one at the lower pivoting arm (7) is directed downward.

7. Separator according to claims 1 through 6, **characterized in that** mechanical elements, e.g. flat or plow-type blades, which serve to create additional turbulences, are attached to the pivoting arms (6, 7).

## Revendications

1. Séparateur pour les liquides très visqueuses ou peu visqueuses qui se congèlent en refroidissant, comme p.ex. graisse ou huile provenant des eaux d'égouts, comprenant un bassin de séparation où les eaux résiduaires passent en général horizontalement à une vitesse ralentie et, au moins, un agitateur tournant librement autour d'un axe dont le bras d'agitateur est pourvu d'une buse à jets laquelle est actionnée par la répulsion de l'eau injectée, **caractérisé en ce que** la buse à jets (12, 13) est pivotant librement autour de l'axe du bras d'agitateur (6, 7).

2. Séparateur selon revendication 1, **caractérisé en ce que** l'axe (10, 11) de la buse à jets (12, 13) s'écarte de la tangente au sens de rotation du bras d'agitateur (6, 7).

3. Séparateur selon revendication 1 ou 2, **caractérisé en ce que** la direction d'injection de la buse à jets (12, 13) s'écarte de la tangente au sens de rotation du bras d'agitateur (6,7) et à l'axe libre (10, 11) de la buse à jets (12, 13).

4. Séparateur selon les revendications 1 à 3, **caractérisé en ce que** l'agitateur (5) est équipé de deux bras d'agitateurs arrangés diamétralement opposés à des hauteurs différentes.

5. Séparateur selon les revendications 1 à 3, **caractérisé en ce que** le séparateur est pourvu de deux agitateurs ayant chacun un bras d'agitateur à une hauteur différente.

6. Séparateur selon les revendications 4 ou 5, **caractérisé en ce que** la buse à jets (12) du bras d'agitateur supérieur (6) est dirigée vers le haut et celle du bras d'agitateur inférieur (7) vers le bas.

7. Séparateur selon les revendications 1 à 6, **caractérisé en ce que** les bras d'agitateur sont munis additionnellement des éléments mécaniques (p.ex. palettes d'agitation ou socs de charrue) pour créer des turbulences.
